# EUROPEAN PATENT APPLICATION

(11) **EP 4 571 980 A1**
(43) Date of publication of application: **18.06.2025**
(21) Application number: 24207357.5
(22) Date of filing: 18.10.2024
(51) Int. Cl.: H01M 50/289

(54) **BATTERY PACK**

(30) Priority: 13.12.2023 KR 20230181251
(71) Applicant: Hyundai Motor Company, Seoul 06797 (KR); Kia Corporation, Seocho-gu Seoul 06797 (KR)
(72) Inventor: KIM, Kyung Mo, 18280 Hwaseong-si, Gyeonggi-do (KR); PARK, Jong Gyu, 18280 Hwaseong-si, Gyeonggi-do (KR); KO, Gun Woo, 18280 Hwaseong-si, Gyeonggi-do (KR); KIM, Chan Sol, 18280 Hwaseong-si, Gyeonggi-do (KR)
(74) Representative: Isarpatent

(57) **Abstract**

A battery pack includes a battery sub-pack including a battery stack including a structure in which a plurality of batteries including electrodes and separators is stacked in one direction, and an endplate portion tightly attached to the battery stack, an extension member provided to be tightly attached to the endplate portion, and a tray portion accommodating the battery sub-pack and the extension member, in which the endplate portion, the extension member, and the tray portion are fixedly coupled to one another.

## Description

### BACKGROUND OF THE PRESENT DISCLOSURE

### Field of the Present Disclosure

The present disclosure relates to a battery pack, and more particularly, to a battery pack having a structure with an improved energy density in comparison with the related art.

### Description of Related art

A battery pack mounted in a vehicle or the like is typically manufactured by manufacturing a cell having a structure in which electrodes and separators are stacked, manufacturing a battery module by stacking the plurality of cells, and then stacking the plurality of battery modules.

Meanwhile, in the case of an electric vehicle, it is necessary to maximize a capacity of a battery pack mounted in the electric vehicle to ensure a long traveling distance. However, because the electric vehicle has a limited space in which the battery pack may be mounted, it is essential to mount a battery pack with a high energy density per unit volume to ensure the long traveling performance of the electric vehicle.

However, generally, not only a battery is mounted in the battery pack, but also a plurality of components, such as components for heat dissipation and cooling, components for electrical and thermal insulation from the outside thereof, and components for protecting the battery from an external impact, which are irrelevant to components (i.e., the battery) for storing electrical energy, are mounted in the battery pack. The present configuration causes the deterioration in energy density of the battery pack. These problems are caused by the configuration in which the battery, the battery module, and the battery pack are sequentially manufactured, and similar functions of the battery module and the battery pack overlap one another.

The information included in this Background of the present disclosure is only for enhancement of understanding of the general background of the present disclosure and may not be taken as an acknowledgement or any form of suggestion that this information forms the prior art already known to a person skilled in the art.

### BRIEF SUMMARY

Various aspects of the present disclosure are directed to maximizing an energy density of a battery pack by minimizing the number of components used to perform functions irrelevant to a function of storing electrical energy in a battery pack.

To achieve the above-mentioned object, one aspect of the present disclosure provides a battery pack including: a battery sub-pack including a battery stack including a structure in which a plurality of batteries including electrodes and separators is stacked in one direction, and an endplate portion tightly attached to the battery stack; an extension member provided to be tightly attached to the endplate portion; and a tray portion accommodating the battery sub-pack and the extension member, in which the endplate portion, the extension member, and the tray portion are fixedly coupled to one another.

Through-holes may be formed in the endplate portion and the extension member, the battery pack may further include coupling members penetrating the through-holes formed in the endplate portion and the extension member, and the endplate portion, the extension member, and the tray portion may be fixedly coupled to one another by being fastened to the coupling members.

The tray portion may include: a tray body region defining an internal space S in which the battery sub-pack and the extension member are accommodated; and an internal protruding region protruding toward the internal space S from an internal surface of the tray body region that defines the internal space S, and the coupling members may include lateral coupling members fastened to the endplate portion, the extension member, and the internal protruding region.

The battery sub-pack may include: a first battery sub-pack; and a second battery sub-pack spaced from the first battery sub-pack in one direction, the extension member may be provided between the endplate portion provided in the first battery sub-pack and the endplate portion provided in the second battery sub-pack, and the endplate portion provided in the first battery sub-pack, the endplate portion provided in the second battery sub-pack, the extension member, and the tray portion may be fixedly coupled to one another.

The endplate portion may include : a first endplate portion tightly attached to a first side of the battery stack; and a second endplate portion tightly attached to a second side of the battery stack and facing the first endplate portion with the battery stack interposed therebetween, the extension member may be provided to be tightly attached to each of the first endplate portion provided in the first battery sub-pack and the second endplate portion provided in the second battery sub-pack, and the first endplate portion provided in the first battery sub-pack, the second endplate portion provided in the second battery sub-pack, the extension member, and the tray portion may be fixedly coupled to one another by being fastened to the lateral coupling members.

The first endplate portion may include a first fastening region including a through-hole, which is penetrated by the lateral coupling member, and extending toward the internal protruding region, the second endplate portion may include a second fastening region including a through-hole, which is penetrated by the lateral coupling member, and extending toward the internal protruding region, a lower surface of the first fastening region may face an upper surface of the internal protruding region, and a lower surface of the second fastening region may face an upper surface of the first fastening region.

The extension member may include: an extension member body region provided to be tightly attached to the endplate portion; and a third fastening region extending from the extension member body region and including a through-hole penetrated by the lateral coupling member, and a lower surface of the third fastening region may face an upper surface of the second fastening region.

The endplate portion may include: an endplate body region provided to be tightly attached to the battery stack; and a bent region extending from the endplate body region and bent toward the battery stack, and the bent region and the battery stack may at least partially overlap each other in a direction in which the bent region extends from the endplate body region.

The endplate portion may include: an endplate body region provided to be tightly attached to the battery; and an interference region bent toward the extension member from the endplate body region, and the interference region and the extension member may at least partially overlap each other in a direction in which the interference region extends from the endplate body region.

The endplate portion includes: an insulation plate provided to be tightly attached to the battery stack and including a material having electrical insulation; and a surface pressure plate provided to be tightly attached to the insulation plate and provided to face the battery stack with the insulation plate interposed therebetween.

The insulation plate may include: an insulation plate body region provided to be tightly attached to the battery stack; and an insulation plate protruding region protruding from the insulation plate body region in a direction away from the battery stack, a through-hole may be formed in the surface pressure plate and include a shape corresponding to the insulation plate protruding region, and the insulation plate protruding region may be coupled to the surface pressure plate through the through-hole of the surface pressure plate.

The insulation plate protruding region may be provided as a plurality of insulation plate protruding regions.

The extension member may include an extension member body region provided to be tightly attached to the surface pressure plate, the extension member body region may include: a first thickness section having a first thickness t1 defined in a direction toward the surface pressure plate; and a second thickness section having a second thickness t2 defined in the direction toward the surface pressure plate, and the second thickness may be smaller than the first thickness.

The second thickness section may be formed at an upper or lower end portion of a region of the extension member body region that faces the insulation plate protruding region, and a width of the second thickness section formed at the upper or lower end portion of the extension member body region may be greater than a width of the insulation plate protruding region.

In the extension member body region, the second thickness section may be formed at an upper or lower end portion of a region of the extension member body region that faces the insulation plate protruding region, and a width of the second thickness section formed at the upper or lower end portion of the extension member body region may correspond to a width of the insulation plate protruding region.

The second thickness section may be formed at each of the upper and lower end portions of the region of the extension member body region that faces the insulation plate protruding region.

The insulation plate protruding region may be provided to be tightly attached to the extension member body region.

In one battery sub-pack, the battery stacks may include: a first battery stack; and a second battery stack spaced from the first battery stack in one direction, and the surface pressure plate may be provided as a single surface pressure plate in the endplate portion provided at each of two opposite sides of the battery stack in one battery sub-pack.

The extension member may include an extension member body region provided to be tightly attached to the endplate portion, and in the extension member body region, a recessed section may be formed in a section corresponding to an interval between the first battery stack and the second battery stack in one battery sub-pack, and the recessed section may include a recessed shape formed as the recessed section is lower in height in an upward/downward direction than other regions.

The tray portion may include a tray body region including an internal space S in which the battery sub-pack and the extension member are accommodated, and the coupling members may include bottom coupling members to which the endplate portion, the extension member, and the tray body region are fastened.

The battery stack may be provided as a plurality of battery stacks in the battery sub-pack, a direction in which the plurality of battery stacks is spaced from one another in the battery sub-pack may intersect a direction in which the plurality of batteries is stacked in the battery stack, and in the battery sub-pack, a length of the surface pressure plate may correspond to a total sum of a sum of lengths of the plurality of battery stacks in the battery sub-pack and a sum of intervals between the two adjacent battery stacks.

The bottom coupling member may be inserted into an upper surface of the tray body region and spaced apart upward from a lower surface of the tray body region.

The bottom coupling member may be fastened to the interference region provided on the endplate portion, an extension member body region, which defines a body of the extension member, and the tray body region.

A region of the extension member body region to which the bottom coupling member is fastened may include a shape recessed downward.

According to an exemplary embodiment of the present disclosure, it is possible to maximize the energy density of the battery pack by minimizing the number of components used to perform functions irrelevant to the function of storing electrical energy in the battery pack.

The methods and apparatuses of the present disclosure have other features and advantages which will be apparent from or are set forth in more detail in the accompanying drawings, which are incorporated herein, and the following Detailed Description, which together serve to explain certain principles of the present disclosure.

### BRIEF DESCRIPTION OF THE DRAWINGS

FIG. 1 is a perspective view exemplarily illustrating a battery pack according to an exemplary embodiment of the present disclosure.
FIG. 2 is a perspective view exemplarily illustrating a state in which a pack cover is removed from the battery pack according to an exemplary embodiment of the present disclosure.
FIG. 3 is an exploded perspective view exemplarily illustrating components illustrated in FIG. 2.
FIG. 4 is an exploded perspective view exemplarily illustrating a battery stack, a sensing block, a sensing block insulation member, and a sensing member in a battery sub-pack provided in the battery pack according to an exemplary embodiment of the present disclosure.
FIG. 5 is an exploded perspective view exemplarily illustrating the battery sub-pack provided in the battery pack according to an exemplary embodiment of the present disclosure.
FIG. 6 is an exploded perspective view exemplarily illustrating an endplate in the battery sub-pack provided in the battery pack according to an exemplary embodiment of the present disclosure.
FIG. 7 is an enlarged view exemplarily illustrating a state in which the endplates of the adjacent battery sub-packs overlap each other in the battery pack according to an exemplary embodiment of the present disclosure.
FIG. 8 is an enlarged view exemplarily illustrating a state in which the endplate and an extension member are fastened in the battery pack according to an exemplary embodiment of the present disclosure.
FIG. 9 is an enlarged perspective view exemplarily illustrating a partial region of a tray portion of the battery pack according to an exemplary embodiment of the present disclosure.
FIG. 10 is a first vertical cross-sectional view exemplarily illustrating a partial region of the battery pack according to an exemplary embodiment of the present disclosure.
FIG. 11 is a second vertical cross-sectional view exemplarily illustrating a partial region of the battery pack according to an exemplary embodiment of the present disclosure.
FIG. 12 is an exploded perspective view exemplarily illustrating the extension member provided in the battery pack according to an exemplary embodiment of the present disclosure.

It may be understood that the appended drawings are not necessarily to scale, presenting a somewhat simplified representation of various features illustrative of the basic principles of the present disclosure. The specific design features of the present disclosure as included herein, including, for example, specific dimensions, orientations, locations, and shapes will be determined in part by the particularly intended application and use environment.

In the figures, reference numbers refer to the same or equivalent portions of the present disclosure throughout the several figures of the drawing.

### DETAILED DESCRIPTION

Reference will now be made in detail to various embodiments of the present disclosure(s), examples of which are illustrated in the accompanying drawings and described below. While the present disclosure(s) will be described in conjunction with exemplary embodiments of the present disclosure, it will be understood that the present description is not intended to limit the present disclosure(s) to those exemplary embodiments of the present disclosure. On the other hand, the present disclosure(s) is/are intended to cover not only the exemplary embodiments of the present disclosure, but also various alternatives, modifications, equivalents and other embodiments, which may be included within the spirit and scope of the present disclosure as defined by the appended claims.

Hereinafter, a battery pack according to an exemplary embodiment of the present disclosure will be described with reference to the drawings.

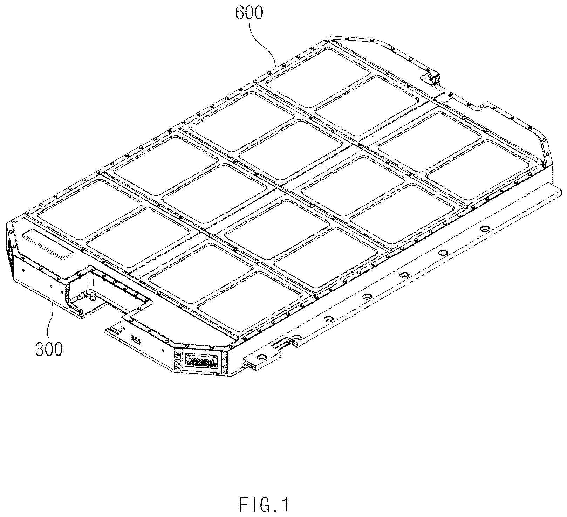

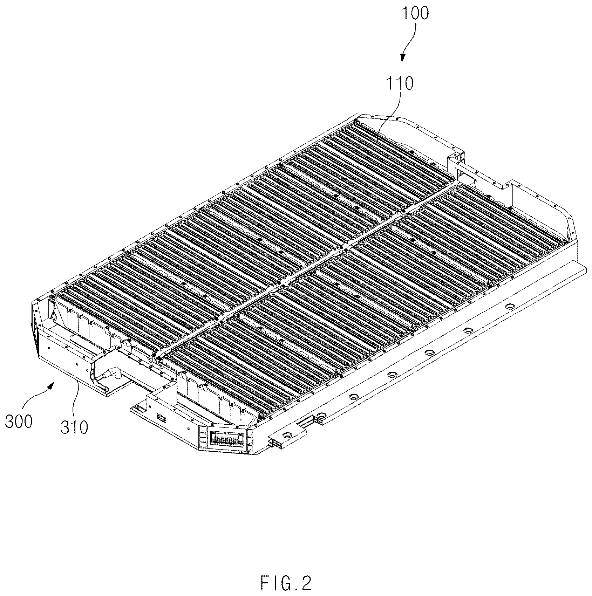

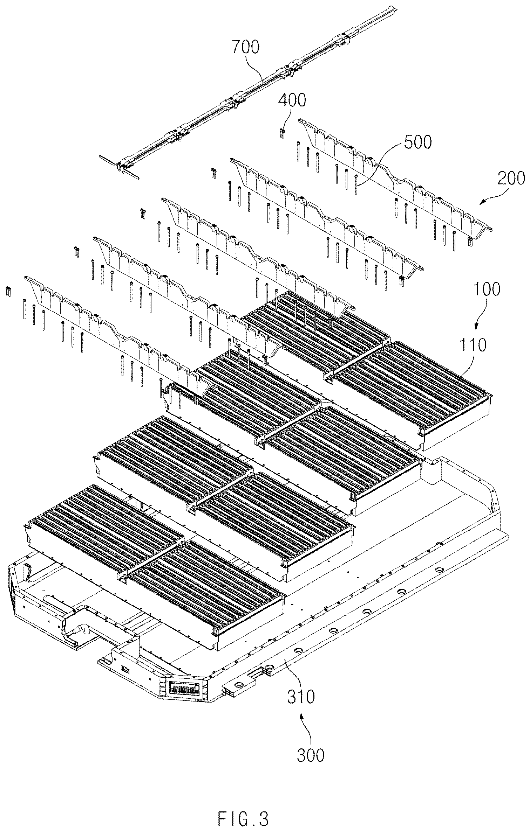

FIG. 1 is a perspective view exemplarily illustrating a battery pack according to an exemplary embodiment of the present disclosure, and FIG. 2 is a perspective view exemplarily illustrating a state in which a pack cover is removed from the battery pack according to an exemplary embodiment of the present disclosure. FIG. 3 is an exploded perspective view exemplarily illustrating components illustrated in FIG. 2.

With reference to FIG. 1, FIG. 2, and FIG. 3, the battery pack according to an exemplary embodiment of the present disclosure may include battery sub-packs 100. The battery sub-pack 100 may include a structure in which a plurality of batteries is stacked. The battery sub-pack 100 may include battery stacks 110 each including a structure in which the plurality of batteries including electrodes and separators is stacked in one direction thereof. However, the above-mentioned description is not limited to a configuration in which the battery stack 110 includes only the batteries. For example, the battery stack 110 may not only include the batteries, but also further include pads provided between the adjacent batteries and configured to press the batteries with a predetermined surface pressure.

Meanwhile, the battery sub-pack 100 provided in the battery pack according to an exemplary embodiment of the present disclosure is a component distinguished from a battery module in the related art. That is, the battery module in the related art includes a means for applying a predetermined surface pressure to the battery in the battery module. In the battery module in the related art, side plates are disposed on two opposite surfaces of a structure in which the batteries are stacked, and a clamp member is mounted to connect the two side plates to press the side plates toward the structure in which the batteries are stacked. Therefore, the predetermined surface pressure may be autonomously applied to the battery of the battery module so that the components between the battery modules may be kept in a fixed state without scattering.

In contrast, the battery sub-pack 100 according to an exemplary embodiment of the present disclosure is not equipped with a component for autonomously applying a surface pressure to the battery, and the internal components of the battery sub-pack 100 cannot be kept in a fixed state without an external device (e.g., a jig). In the instant case, the battery module of the present disclosure differs from the battery module in the related art. However, as described below, the battery sub-pack 100 according to an exemplary embodiment of the present disclosure may apply a predetermined surface pressure to the battery therein by being coupled to other components provided in the battery pack according to an exemplary embodiment of the present disclosure. Furthermore, the components in the battery sub-pack 100 may also be stably fixed relative to one another.

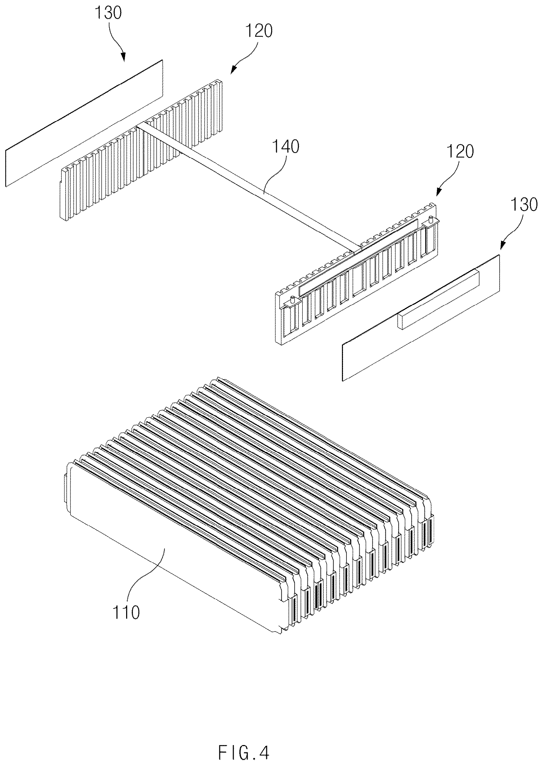

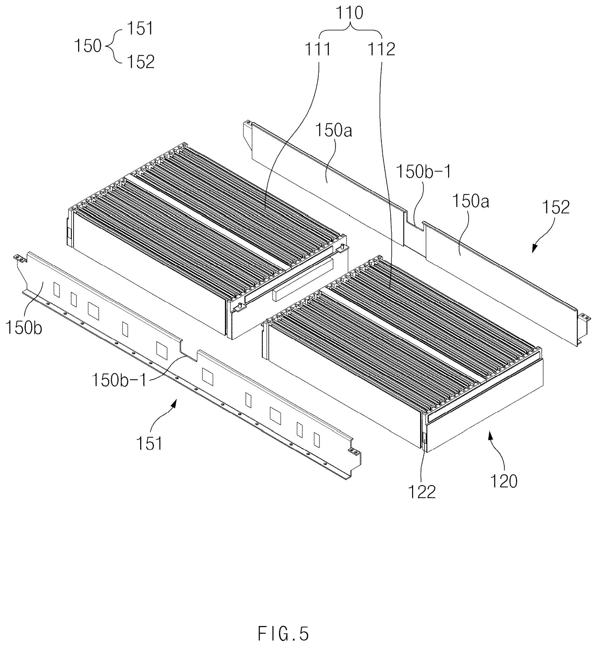

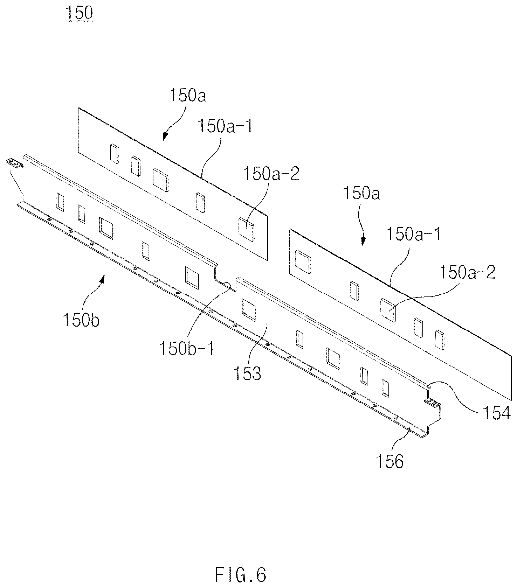

FIG. 4 is an exploded perspective view exemplarily illustrating a battery stack, a sensing block, a sensing block insulation member, and a sensing member in the battery sub-pack provided in the battery pack according to an exemplary embodiment of the present disclosure, FIG. 5 is an exploded perspective view exemplarily illustrating the battery sub-pack provided in the battery pack according to an exemplary embodiment of the present disclosure, and FIG. 6 is an exploded perspective view exemplarily illustrating an endplate in the battery sub-pack provided in the battery pack according to an exemplary embodiment of the present disclosure.

With reference to FIG. 4 and FIG. 5, the battery sub-pack 100 may further include sensing blocks 120 provided at one side of the battery stack 110 and electrically connected to the battery stack 110, and sensing block insulation members 130 provided to face the battery stack 110 with the sensing blocks 120 interposed therebetween. The sensing block 120 may be electrically connected to the battery stack 110 through an electrode lead protruding from the battery stack 110. For example, FIG. 4 and FIG. 5 illustrate states in which the sensing blocks 120 are respectively provided at two opposite sides of the battery stack 110 from which the electrode leads protrude, and the sensing block insulation members 130 are provided outside the sensing blocks 120.

Meanwhile, the sensing blocks 120 may be provided one by one at the two opposite sides of the battery stack 110. In the instant case, the battery sub-pack 100 may further include a connection member 140 configured to electrically connect the sensing blocks 120 provided at the two opposite sides of the battery stack 110. Therefore, it is possible to measure a voltage between the sensing blocks 120 provided at the two opposite sides of the battery stack 110.

Meanwhile, as illustrated in FIG. 5, the battery sub-pack 100 may further include the endplate portions 150 provided to be tightly attached to one side of the battery stack 110. The endplate portion 150 may be provided to be tightly attached to a side surface which is not the side surface on which the sensing block 120 is provided among the side surfaces of the battery sub-pack 100. Meanwhile, in the present specification, a direction in which the sensing block 120 and the endplate portion 150 are positioned with respect to the battery stack 110 is defined as a horizontal direction thereof.

The endplate portions 150 press the battery sub-pack 100 to apply predetermined pressures to the battery stacks 110 provided in the battery sub-pack 100 so that the battery sub-pack 100 may be normally charged or discharged, and swelling, which may occur in the battery stack 110, may be suppressed.

With reference back to FIG. 1, FIG. 2, and FIG. 3, the battery pack 10 according to an exemplary embodiment of the present disclosure may include an extension member 200 provided to be tightly attached to the endplate portion 150, a tray portion 300 configured to accommodate the battery sub-pack 100 and the extension member 200, and a pack cover 600 configured to cover an upper side of the tray portion 300 based on FIG. 1.

The extension member 200 may be configured to ensure overall physical rigidity of the battery pack 10. That is, in case that an external force is applied to the battery pack 10, the extension member 200 resists the external force, which may prevent deformation of and damage to the battery pack 10. Furthermore, the extension member 200 may press the battery sub-pack 100 through the endplate portion 150. In the instant case, it is possible to more effectively prevent the battery sub-pack 100 from swelling.

With reference to FIG. 1, FIG. 2, and FIG. 3, the extension member 200 may include a shape extending in a longitudinal direction, i.e., the horizontal direction intersecting the direction in which the batteries are stacked in the battery stack 110. To ensure sufficient mechanical rigidity, the extension member 200 may be made of a metal or alloy material. For example, the extension member 200 may be made of an aluminum material. However, the material of the extension member 200 is not limited thereto. A detailed shape of the extension member 200 will be described below.

Meanwhile, the object of the present disclosure is to maximize an energy density of the battery pack 10 by increasing a volume in the battery pack 10 occupied by the batteries. To achieve the above-mentioned object, it is necessary to minimize a volume in the battery pack 10, which is occupied by components other than the battery, in comparison with the related art.

Meanwhile, the battery pack is generally manufactured by i) a process of manufacturing the battery including a structure in which electrodes and separators are stacked, ii) a process of manufacturing the battery module by stacking the plurality of batteries, and iii) a process of stacking the plurality of battery modules. In the instant case, generally, the functions of the components, which form the battery module, overlap the functions of the components other than the components of the battery module in the battery pack, which degrades the energy density of the battery pack.

The present disclosure has been made in an effort to solve the above-mentioned problem. That is, according to an exemplary embodiment of the present disclosure, the components, which perform similar functions in the battery pack, are eliminated so that a larger number of batteries may be mounted in the battery pack, maximizing the energy density of the battery pack.

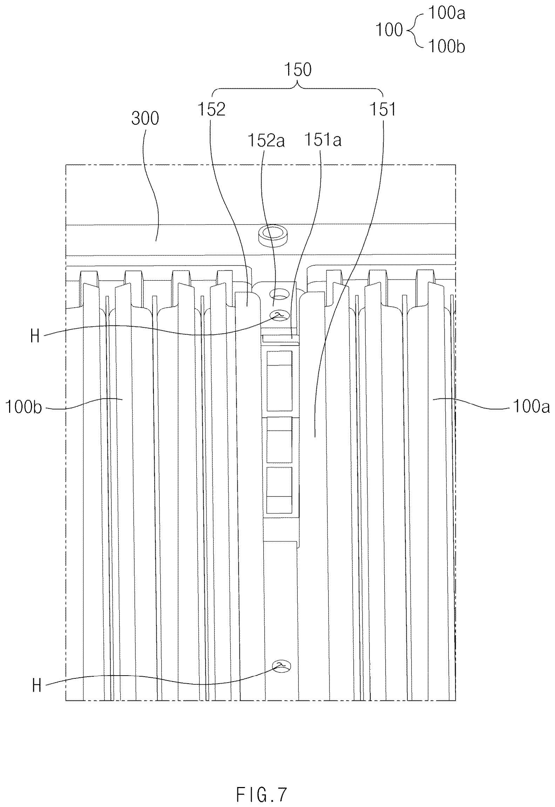

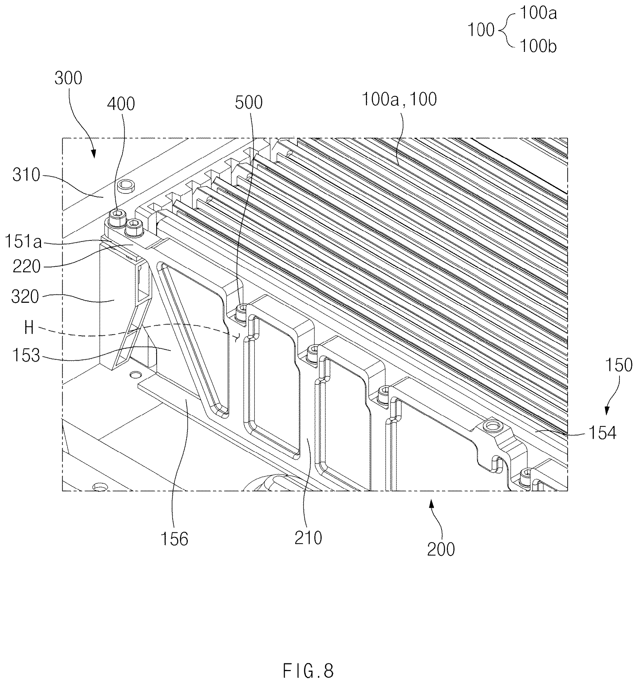

FIG. 7 is an enlarged view exemplarily illustrating a state in which the endplates of the adjacent battery sub-packs overlap each other in the battery pack according to an exemplary embodiment of the present disclosure, and FIG. 8 is an enlarged view exemplarily illustrating a state in which the endplate and the extension member are fastened in the battery pack according to an exemplary embodiment of the present disclosure.

With reference to FIGS. 7 and 8, to achieve the above-mentioned object, the endplate portion 150, the extension member 200, and the tray portion 300 according to an exemplary embodiment of the present disclosure may be fixedly coupled to one another.

According to an exemplary embodiment of the present disclosure, the endplate portion 150 and the extension member 200 may be understood as components made by integrating the components of the battery sub-pack and the components of the battery pack, which exclude the components of the battery sub-pack, in the battery pack in the related art. That is, according to an exemplary embodiment of the present disclosure, the components, which are provided in the battery sub-pack to ensure the mechanical rigidity of the battery sub-pack, and the components, which are provided in the battery pack to ensure the mechanical rigidity of the battery pack, are integrated into the extension member 200, which may simplify the configuration in which the components are mounted in the battery pack 10. Therefore, according to an exemplary embodiment of the present disclosure, the energy density of the battery pack 10 may be improved. Hereinafter, the features for fixing and coupling the endplate portion 150, the extension member 200, and the tray portion 300 will be described.

With reference to FIGS. 7 and 8, thorugh-holes(H) may be formed in the endplate portion 150 and the extension member 200. The thorugh-holes(H) formed in the endplate portion 150 and the thorugh-holes(H) formed in the extension member 200 may be formed at positions corresponding to one another and thus communicate with one another.

Meanwhile, the battery pack 10 according to an exemplary embodiment of the present disclosure may further include coupling members penetrating the thorugh-holes(H) formed in the endplate portion 150 and the extension member 200. In the instant case, the endplate portion 150, the extension member 200, and the tray portion 300 may be fixedly coupled to one another by being fastened by the coupling members. The coupling members may penetrate the thorugh-holes(H), which are formed in the endplate portion 150 and the extension member 200, and be coupled to the tray portion 300. Therefore, according to an exemplary embodiment of the present disclosure, the endplate portion 150, the extension member 200, and the tray portion 300 may be fixedly coupled to one another. For example, the coupling member may be a bolt. Furthermore, for example, the coupling member may penetrate not only the endplate portion 150 and the extension member 200 but also the tray portion 300.

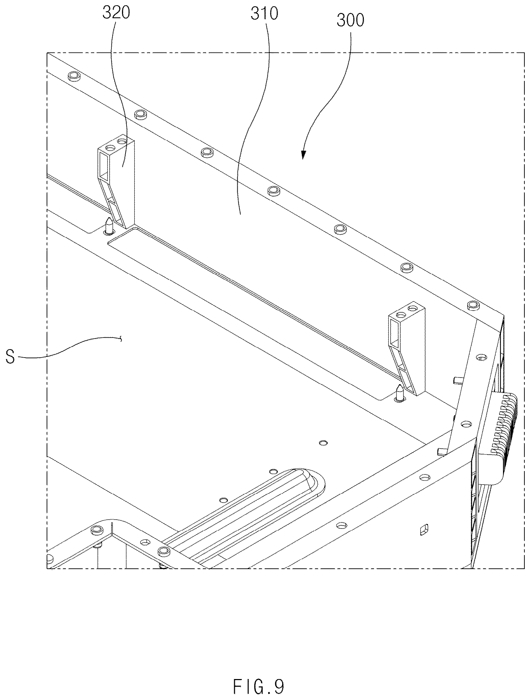

FIG. 9 is an enlarged perspective view exemplarily illustrating a partial region of the tray portion of the battery pack according to an exemplary embodiment of the present disclosure.

With reference to FIG. 8 and FIG. 9, the tray portion 300 may include a tray body region 310 configured to define an internal space S in which the battery sub-pack 100 and the extension member 200 are accommodated, and internal protruding regions 320 protruding toward the internal space S from an internal surface of the tray body region 310 that defines the internal space S.

Meanwhile, the coupling members may include lateral coupling members 400 fastened to the endplate portion 150, the extension member 200, and the internal protruding regions 320. That is, according to an exemplary embodiment of the present disclosure, the lateral coupling members 400 are fastened to the internal protruding regions 320 while penetrating the endplate portion 150 and the extension member 200 so that the endplate portion 150, the extension member 200, and the tray portion 300 may be fixedly coupled to one another. Meanwhile, for example, a predetermined space may be formed between upper and lower surfaces of the internal protruding region 320. The present configuration may be understood as a configuration in which the upper and lower surfaces of the internal protruding region 320 are spaced from each other. In the instant case, the lateral coupling member 400 may penetrate the upper surface of the internal protruding region 320.

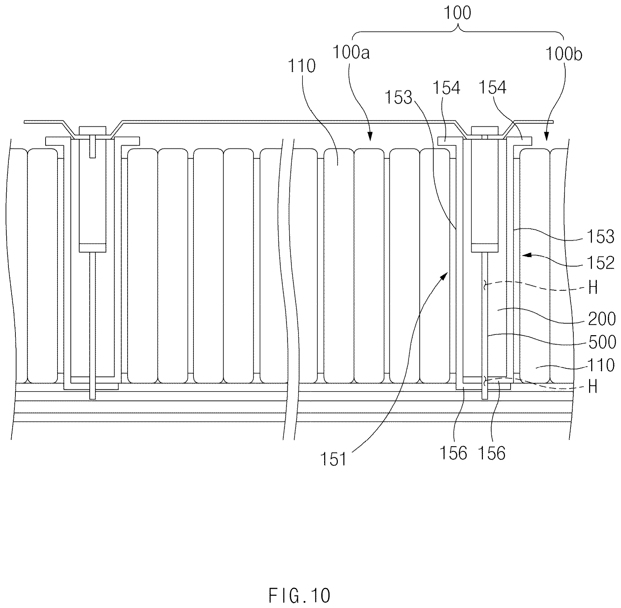

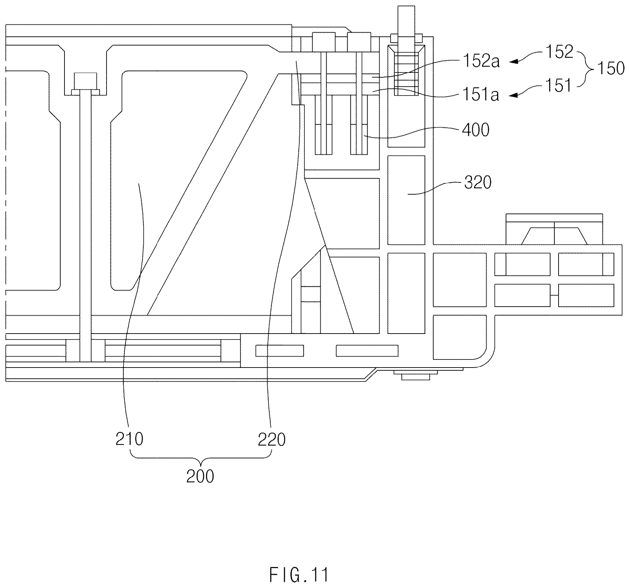

FIG. 10 is a first vertical cross-sectional view exemplarily illustrating a partial region of the battery pack according to an exemplary embodiment of the present disclosure, and FIG. 11 is a second vertical cross-sectional view exemplarily illustrating a partial region of the battery pack according to an exemplary embodiment of the present disclosure.

With reference to FIGS. 7, 8, 10, and 11, the battery pack 10 according to an exemplary embodiment of the present disclosure may include a plurality of battery sub-packs 100. That is, the battery sub-packs 100 provided in the battery pack 10 may include a first battery sub-pack 100a, and a second battery sub-pack 100b spaced from the first battery sub-pack 100a in one direction thereof. However, the configuration in which the battery sub-packs 100 include the first battery sub-pack 100a and the second battery sub-pack 100b does not mean that the battery pack 10 includes only two battery sub-packs. According to a preferable example, the battery pack 10 may include more than two battery sub-packs.

In case that the battery sub-packs 100 include the first battery sub-pack 100a and the second battery sub-pack 100b as described above, the extension member 200 may be provided between the endplate portion 150 provided in the first battery sub-pack 100a and the endplate portion 150 provided in the second battery sub-pack 100b. In the instant case, according to an exemplary embodiment of the present disclosure, the endplate portion 150, which is provided in the first battery sub-pack 100a, the endplate portion 150, which is provided in the second battery sub-pack 100b, the extension members 200, and the tray portion 300 may be fixedly coupled to one another by being fastened to the coupling members.

Meanwhile, in one battery sub-pack 100, the endplate portions 150 may be provided one by one on the two opposite surfaces of the battery stack 110. The present configuration may be understood as a configuration in which in one battery sub-pack 100, the two endplate portions 150 press the battery stack 110 against the two endplate portions 150 in a state in which the two endplate portions 150 face each other with the battery stack 110 interposed therebetween.

Therefore, in one battery sub-pack 100, the endplate portions 150 may be distinguished as a first endplate portion and a second endplate portion. That is, with reference to FIGS. 7, 8, 10, and 11, the endplate portions 150 may include a first endplate portion 151 provided to be tightly attached to one side of the battery stack 110, and a second endplate portion 152 provided to be tightly attached to the other side of the battery stack 110 and provided to face the first endplate portion 151 with the battery stack 110 interposed therebetween. Meanwhile, the above-mentioned and following descriptions of the first endplate portion 151 and the second endplate portion 152 may be applied not only to the battery sub-pack 100 but also to the first battery sub-pack 100a and the second battery sub-pack 100b in the same way.

In the instant case, as illustrated in FIGS. 7, 8, 10, and 11, according to an exemplary embodiment of the present disclosure, the extension members 200 may be provided to be respectively, and tightly attached to the first endplate portion 151 provided in the first battery sub-pack 100a and the second endplate portion 152 provided in the second battery sub-pack 100b. Furthermore, the first endplate portion 151, which is provided in the first battery sub-pack 100a, the second endplate portion 152, which is provided in the second battery sub-pack 100b, the extension members 200, and the tray portion 300 may be fixedly coupled to one another by being fastened to the coupling members. Hereinafter, a relative positional relationship between the first and second endplate portions 151 and 152 of the adjacent battery sub-packs will be described.

Meanwhile, with reference to FIGS. 7, 8, 10, and 11, the first endplate portion 151 may include a first fastening region 151a including the through-hole, which is penetrated by the lateral coupling member 400, and extending toward the internal protruding region 320 of the tray portion 300, and the second endplate portion 152 may include a second fastening region 152a including the through-hole, which is penetrated by the lateral coupling member 400, and extending toward the internal protruding region 320 of the tray portion 300. In the instant case, a lower surface of the first fastening region 151a may be provided to face an upper surface of the internal protruding region 320, and a lower surface of the second fastening region 152a may be provided to face an upper surface of the first fastening region 151a. The present configuration may be understood as a configuration in which the lateral coupling member 400 sequentially is provided to penetrate the second fastening region 152a, the first fastening region 151a, and the internal protruding region 320 from above based on FIGS. 7, 8, 10, and 11. The lower surface of the second fastening region 152a may be tightly attached to the upper surface of the first fastening region 151a, the lower surface of the first fastening region 151a may be tightly attached to the upper surface of the internal protruding region 320.

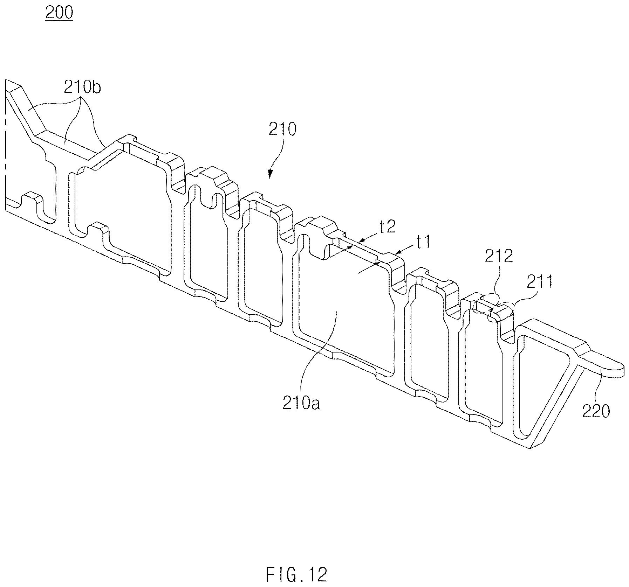

FIG. 12 is an exploded perspective view exemplarily illustrating the extension member provided in the battery pack according to an exemplary embodiment of the present disclosure.

Meanwhile, similar to the first endplate portion 151 and the second endplate portion 152, the extension member 200 may also include a fastening region to which the lateral coupling member 400 is fastened. As illustrated in FIG. 12, the extension member 200 may include an extension member body region 210 configured to define a body of the extension member 200 and tightly attached to the endplate portion 150, and a third fastening region 220 extending from the extension member body region 210 and including a through-hole penetrated by the lateral coupling member 400. The extension member body regions 210 may be provided to be respectively, and tightly attached to the first endplate portion 151 provided in the first battery sub-pack 100a and the second endplate portion 152 provided in the second battery sub-pack 100b.

In the instant case, as illustrated in FIG. 11 and FIG. 12, a lower surface of the third fastening region 220 may be provided to face an upper surface of the second fastening region 152a. The present configuration may be understood as a configuration in which the lateral coupling member 400 sequentially is provided to penetrate the third fastening region 220, the second fastening region 152a, the first fastening region 151a, and the internal protruding region 320 from above based on FIGS. 7, 8, 10, and 11. The lower surface of the third fastening region 220 may be tightly attached to the upper surface of the second fastening region 152a.

Meanwhile, the endplate portion 150 may be divided into a plurality of regions. The above-mentioned and following descriptions of the endplate portion 150 may be applied to the first endplate portion 151 and the second endplate portion 152 in the same way.

With reference to FIGS. 6 and 10, the endplate portion 150 may include an endplate body region 153 tightly attached to the battery stack 110, and a bent region 154 extending from the endplate body region 153 and bent toward the battery stack 110. That is, the bent region 154 may be configured to be bent toward the battery stack 110 provided on the same battery sub-pack 100 together with the endplate 150. When the direction in which the plurality of battery sub-packs 100 is disposed in the battery pack 10 is defined as the horizontal direction, the bent region 154 may extend from an upper end portion of the endplate body region 153.

In the instant case, according to an exemplary embodiment of the present disclosure, as illustrated in FIG. 10, the bent region 154 and the battery stack 110 may at least partially overlap each other in a direction in which the bent region 154 extends from the endplate body region 153. This is to prevent the battery stack 110 from separating from the endplate portion 150 in the battery sub-pack 100 and to position the endplate portion 150 at an appropriate position by use of interference between the endplate portion 150 and the battery stack 110 during the process of manufacturing the battery pack 10. That is, as described above, the battery stack 110 may be prevented from being withdrawn upward based on FIG. 10, and the endplate portion 150 may be prevented from being excessively moved downwards during the process of manufacturing the battery pack 10.

Meanwhile, with continued reference to FIGS. 6 and 10, in addition to the endplate body region 153 and the bent region 154, the endplate portion 150 may further include an interference region 156 bent from the endplate body region 153 toward the extension member 200. That is, the interference region 156 may be understood as a component extending in a direction opposite to the direction in which the bent region 154 extends from the endplate body region 153. That is, the interference region 156 may be configured to be bent in a direction away from the battery stack 110 provided on the same battery sub-pack 100 together with the endplate 150. When the direction in which the battery sub-packs 100 is disposed in the battery pack 10 is defined as the horizontal direction, the interference region 156 may extend from the lower end portion of the endplate body region 153.

In the instant case, according to an exemplary embodiment of the present disclosure, as illustrated in FIG. 10, the interference region 156 and the extension member 200 may at least partially overlap each other in the direction in which the interference region 156 extends from the endplate body region 153. This is to position the extension member 200 at an appropriate position by use of interference between the interference region 156 and the extension member 200 during the process of manufacturing the battery pack 10. That is, as described above, the extension member 200 may be prevented from being excessively moved downwards based on FIG. 10 during the process of manufacturing the battery pack 10. Meanwhile, for example, FIG. 10 illustrates a state in which when the first endplate portion 151 and the second endplate portion 152 are provided to face each other with the extension member 200 interposed therebetween (i.e., the first endplate portion and the second endplate portion, respectively provided in the different battery sub-packs), the interference region 156 of the second endplate portion 152 is disposed between the interference region 156 of the first endplate portion 151 and the extension member 200.

Meanwhile, according to an exemplary embodiment of the present disclosure, the endplate portion 150 may include a structure made by coupling components made of different materials.

That is, with reference to FIG. 6, the endplate portion 150 may include an insulation plate 150a provided to be tightly attached to the battery stack 110 and including a material having electrical insulation, and a surface pressure plate 150b tightly attached to the insulation plate 150a and provided to face the battery stack 110 with the insulation plate 150a interposed therebetween. The surface pressure plate 150b may be made of a metal or alloy material. For example, the surface pressure plate 150b may be manufactured by performing press processing on aluminum. Meanwhile, the bent region 154 and the interference region 156 may be formed only on the surface pressure plate 150b between the insulation plate 150a and the surface pressure plate 150b.

With continued reference to FIG. 6, the insulation plate 150a may include an insulation plate body region 150a-1 tightly attached to the battery stack 110, and an insulation plate protruding region 150a-2 protruding from the insulation plate body region 150a-1 in a direction away from the battery stack 110, i.e., a direction toward the surface pressure plate 150b.

Furthermore, a through-hole including a shape corresponding to the insulation plate protruding region 150a-2 may be formed in the surface pressure plate 150b, and the insulation plate protruding region 150a-2 may penetrate the surface pressure plate 150b through the through-hole formed in the surface pressure plate 150b. FIG. 5 illustrates a state in which the insulation plate protruding region 150a-2 protrudes outward while penetrating the through-hole of the surface pressure plate 150b when the insulation plate 150a and the surface pressure plate 150b are mounted. For example, as illustrated in FIG. 6, the insulation plate protruding region 150a-2 may be provided as a plurality of insulation plate protruding regions 150a-2. In the instant case, the insulation plate 150a and the surface pressure plate 150b may be more stably coupled by the insulation plate protruding regions 150a-2.

Meanwhile, the insulation plate 150a and the surface pressure plate 150b may be bonded to each other. This may be implemented by applying a bondable material onto the insulation plate 150a or the surface pressure plate 150b or using a double-sided tape. However, unlike the above-mentioned configuration, the insulation plate 150a and the surface pressure plate 150b may be tightly attached to each other simply without being bonded to each other.

As described above, in the battery pack 10, the extension member 200 may be provided to be tightly attached to the endplate portion 150. The extension member 200 may be provided to be tightly attached to the surface pressure plate 150b of the endplate portion 150. In the instant case, according to an exemplary embodiment of the present disclosure, a feature for easily assembling the extension member 200 to the endplate portion 150 during the process of manufacturing the battery pack 10 may be additionally provided.

That is, with reference to FIGS. 10 and 12, the extension member 200 may include the extension member body region 210 tightly attached to the surface pressure plate 150b, and the extension member body region 210 may include a first thickness section 211 including a first thickness t1 defined in a direction toward the surface pressure plate 150b, and a second thickness section 212 including a second thickness t2 defined in the direction toward the surface pressure plate 150b. In the instant case, the second thickness t2 may be smaller than the first thickness t1. The present configuration may be understood as a configuration in which the second thickness section 212 of the extension member body region 210 includes a shape recessed relative to the first thickness section 211.

According to an exemplary embodiment of the present disclosure, the second thickness section 212 of the extension member body region 210 may be configured to provide a route along which the extension member 200 is slidably coupled to the endplate portion 150 during the process of assembling the extension member 200 to the endplate portion 150.

To achieve the above-mentioned object, according to an exemplary embodiment of the present disclosure, when the direction in which the battery sub-pack 100 is disposed in the battery pack 10 is defined as the horizontal direction, the second thickness section 212 may be formed at an upper or lower end portion of a region of the extension member body region 210 that faces the insulation plate protruding region 150a-2. In the instant case, a width of the second thickness section 212 formed at the upper or lower end portion of the extension member body region 210 may be greater than a width of the insulation plate protruding region 150a-2. The width of the second thickness section 212 formed at the upper or lower end portion of the extension member body region 210 may correspond to the width of the insulation plate protruding region 150a-2. For example, FIG. 12 illustrates a state in which the second thickness sections 212 are respectively formed at the upper and lower end portions of the region of the extension member body region 210 that faces the insulation plate protruding region.

With reference to FIGS. 8, 10, and 12, a part of the process of manufacturing the battery pack 10 according to an exemplary embodiment of the present disclosure may be implemented as described below. The first battery sub-pack 100a and the second battery sub-pack 100b are disposed on the tray body region 310 of the tray portion 300. In the instant case, the first fastening region 151a of the first endplate portion 151 of the first battery sub-pack 100a and the second fastening region 152a of the second endplate portion 152 of the second battery sub-pack 100b are disposed on the internal protruding region 320 of the tray portion 300.

Thereafter, the extension member 200 is inserted into the space between the first battery sub-pack 100a and the second battery sub-pack 100b. In the instant case, the second thickness section 212 of the extension member 200 may pass through the insulation plate protruding region 150a-2 formed on the first endplate portion 151 of the first battery sub-pack 100a and the insulation plate protruding region 150a-2 formed on the second endplate portion 152. In contrast, the first thickness section 211, which includes a larger thickness than the second thickness section 212, cannot pass through the insulation plate protruding region 150a-2 formed on the first endplate portion 151 of the first battery sub-pack 100a and the insulation plate protruding region 150a-2 formed on the second endplate portion 152. Therefore, the extension member 200 is accommodated within a designed and predetermined range in the internal space of the tray portion 300 while sliding along a predetermined route by the interference between the first thickness section 211 and the insulation plate protruding region 150a-2.

Meanwhile, as described above, the extension members 200 may be provided to be respectively, and tightly attached to the first endplate portion 151 provided in the first battery sub-pack 100a and the second endplate portion 152 provided in the second battery sub-pack 100b. Therefore, to ensure both the assemblability to the first endplate portion 151 and the assemblability to the second endplate portion 152, the recessed region formed in the second thickness section t2 of the extension member 200 may be formed in both the two opposite surfaces of the extension member 200.

Meanwhile, as described above, the extension member 200 may press the battery sub-pack 100 through the endplate portion 150. Therefore, the insulation plate protruding region 150a-2 may be provided to be tightly attached to the extension member body region 210.

In the instant case, with reference to FIGS. 3, 8, and 12, a groove region 210a including a recessed shape may be formed in the region of the extension member body region 210 to which the insulation plate protruding region 150a-2 is tightly attached. The groove region 210a may communicate with the second thickness section 212. In the instant case, the extension member 200 may slide along the endplate portions 150, 151, or 152 by the second thickness section 212, and then the insulation plate protruding region 150a-2 of the endplate portion 150 may be accommodated in the groove region 210a. For example, as illustrated in FIGS. 3, 8, and 12, the second thickness section 212 and the groove region 210a may communicate with each other in an upward/downward direction thereof. For example, a thickness of the extension member body region 210 in the second thickness section 212 and a thickness of the extension member body region 210 in the groove region 210a may be equal or correspond to each other.

Meanwhile, according to an exemplary embodiment of the present disclosure, in one battery sub-pack 100, the battery stack 110 may be provided as a plurality of battery stacks 110. That is, as illustrated in FIG. 4 and FIG. 5, in one battery sub-pack 100, the battery stacks 110 may include a first battery stack 111, and a second battery stack 112 spaced from the first battery stack 111 in one direction thereof. For example, the direction in which the plurality of battery sub-packs 100 is disposed in the battery pack 10, the direction in which the plurality of batteries is stacked in one battery stack 100, and the direction in which the plurality of battery stacks 111 and 112 is spaced from each other in one battery sub-pack 100 may be orthogonal to one another or intersect one another. Meanwhile, the above-mentioned description of the battery stack 110 may also be applied to the first battery stack 111 and the second battery stack 112 in the same way.

In the instant case, as illustrated in FIG. 5 and FIG. 6, according to the example of the present disclosure, when the endplate portions 150 are respectively provided at the two opposite sides of the battery stack 110 in one battery sub-pack 100, the surface pressure plate 150b may be provided as a single surface pressure plate 150b, but the insulation plate 150a may be provided as a plurality of insulation plates 150a. When the endplate portions 150 are respectively provided at the two opposite sides of the battery stack 110 in one battery sub-pack 100, a length of the surface pressure plate 150b may be connected to a sum of i) a length of the first battery stack 111, ii) a length of the second battery stack 112, and iii) an interval between the first battery stack 111 and the second battery stack 112. When the present configuration is generalized, a length of the surface pressure plate 150b of each of the endplate portions 150 respectively provided at the two opposite sides of the battery stack 110 in the battery sub-pack 100 may correspond to a total sum of a sum of lengths of the plurality of battery stacks in the battery sub-pack 100 and a sum of intervals between the two adjacent battery stacks. In contrast, a length of the insulation plate 150a of each of the endplate portions 150 respectively provided at the two opposite sides of the battery stack 110 in one battery sub-pack 100 may correspond to a length of each of the first and second battery stacks 111 and 112 corresponding to the insulation plate 150a. However, unlike the above-mentioned configuration, a single insulation plate 150a may also be provided in one endplate portion 150.

Meanwhile, in case that the battery stacks 110 of one battery sub-pack 100 include the first battery stack 111 and the second battery stack 112 as described above, the extension members 200 may be respectively, and tightly attached to the endplate provided on the first battery stack 111 and the endplate provided on the second battery stack 112.

Meanwhile, as illustrated in FIGS. 3, 5, and 12, in the extension member body region 210 of the extension member 200, a recessed section 210b may be formed in a section corresponding to an interval between the first battery stack 111 and the second battery stack 112 in one battery sub-pack 100, and the recessed section 210b includes a recessed shape formed as the recessed section 210b is lower in height in the upward/downward direction than the other regions. Furthermore, another recessed section 150b-1 may be formed in a region of the surface pressure plate 150b of the endplate portion 150, which corresponds to the recessed section 210b, and the recessed section 150b-1 includes a recessed shape formed as the recessed section 150b-1 is smaller in width in the upward/downward direction than the other regions.

As illustrated in FIG. 3, the battery pack 10 may further include an assembly module 700 extending in the direction in which the plurality of battery sub-packs 100 and the plurality of extension members 200 are disposed. The assembly module 700 may have components such as a busbar configured to electrically connect the battery pack 10 and the outside and a component for providing communication between the battery pack 10 and the outside thereof. In the instant case, the assembly module 700 may be accommodated in the recessed section 210b of the extension member body region 210 and the recessed section 150b-1 of the surface pressure plate 150b. That is, the recessed section 210b of the extension member body region 210 and the recessed section 150b-1 of the surface pressure plate 150b may be configured to define spaces in which the assembly module 700 may be accommodated.

Meanwhile, as illustrated in FIGS. 8 and 10, according to an exemplary embodiment of the present disclosure, in the battery pack 10, the coupling members for fastening the endplate portion 150, the extension member 200, and the tray portion 300 may further include the other components in addition to the lateral coupling member 400. That is, the coupling members may further include bottom coupling members 500 configured to fasten the endplate portion 150, the extension member 200, and the tray body region 310 of the tray portion 300. In the instant case, the bottom coupling members 500 may be fastened to the extension member body region 210 of the extension member 200, the interference region 156 provided on the endplate portion 150, and the tray body region 310. As illustrated in FIGS. 8 and 10, the bottom coupling member 500 may penetrate the interference region 156, which is provided on each of the first and second endplate portions 151 and 52 facing each other, and the extension member body region 210, which is provided between the first endplate portion 151 and the second endplate portion 152, and then be fastened to the tray body region 310. Meanwhile, for example, as illustrated in FIGS. 8 and 10, a region of the extension member body region 210, to which the bottom coupling member 500 is fastened, may include a shape recessed downward. Furthermore, for example, the bottom coupling member 500 may be inserted into and fastened to the upper surface of the tray body region 310 and spaced apart upwards from the lower surface of the tray body region 310. The present configuration may be understood as a configuration in which the bottom coupling member 500 is fastened to the tray body region 310 without penetrating the tray body region 310 in the upward/downward direction thereof.

The bottom coupling member 500 is configured to fix the battery sub-pack 100 to the extension member 200 and the tray portion 300 and are also configured to form surface pressures on the plurality of batteries provided in the battery stack 110 of the battery sub-pack 100. That is, because the bottom coupling member 500 is fastened to the tray body region 310 through the extension member body region 210, the bottom coupling member 500 contributes to allowing the extension member body region 210 tightly attached to the endplate portion 150 to press the endplate 150. Therefore, a force applied by the extension member body region 210 to press the endplate 150 may be transmitted to the plurality of batteries in the battery stack 110. Therefore, a predetermined surface pressure may be formed on the battery.

Meanwhile, according to the example of the present disclosure, the sensing block 120 may further include a component configured to interfere with the extension member 200 when the extension member 200 is mounted to the side surface of the battery sub-pack 100, preventing the extension member 200 from deviating from a predetermined position thereof. That is, as illustrated in FIG. 5, an interference protruding portion 122 may be further formed in a region of the sensing block 120 that faces the endplate portion 150, and the interference protruding portion 122 may protrude toward the endplate portion 150. For example, the interference protruding portion 122 may be positioned below the endplate portion 150 in the region that faces the endplate portion 150. In the instant case, in case that the endplate portion 150 is mounted to one side of the battery stack 110 during the process of manufacturing the battery pack 10, it is possible to prevent the endplate portion 150 from deviating from a predetermined range and moving downward relative to the battery stack 110.

Meanwhile, in the present specification, for convenience of description, the upward/downward direction and the horizontal direction have been defined, and the battery pack has been described. However, it is noted that the upward/downward direction and the horizontal direction are not the directions defined in consideration of the mounted state of the battery pack. That is, the battery pack according to an exemplary embodiment of the present disclosure may be used after being mounted on other components (e.g., a vehicle) and provided in other states (e.g., a state of being turned upside down) different from the upward/downward direction defined in the present specification.

For convenience in explanation and accurate definition in the appended claims, the terms "upper", "lower", "inner", "outer", "up", "down", "upwards", "downwards", "front", "rear", "back", "inside", "outside", "inwardly", "outwardly", "interior", "exterior", "internal", "external", "forwards", and "backwards" are used to describe features of the exemplary embodiments with reference to the positions of such features as displayed in the figures. It will be further understood that the term "connect" or its derivatives refer both to direct and indirect connection.

The term "and/or" may include a combination of a plurality of related listed items or any of a plurality of related listed items. For example, "A and/or B" includes all three cases such as "A", "B", and "A and B".

In exemplary embodiments of the present disclosure, "at least one of A and B" may refer to "at least one of A or B" or "at least one of combinations of at least one of A and B". Furthermore, "one or more of A and B" may refer to "one or more of A or B" or "one or more of combinations of one or more of A and B".

In the present specification, unless stated otherwise, a singular expression includes a plural expression unless the context clearly indicates otherwise.

In the exemplary embodiment of the present disclosure, it should be understood that a term such as "include" or "have" is directed to designate that the features, numbers, steps, operations, elements, parts, or combinations thereof described in the specification are present, and does not preclude the possibility of addition or presence of one or more other features, numbers, steps, operations, elements, parts, or combinations thereof.

According to an exemplary embodiment of the present disclosure, components may be combined with each other to be implemented as one, or some components may be omitted.

The foregoing descriptions of specific exemplary embodiments of the present disclosure have been presented for purposes of illustration and description. They are not intended to be exhaustive or to limit the present disclosure to the precise forms disclosed, and obviously many modifications and variations are possible in light of the above teachings. The exemplary embodiments were chosen and described in order to explain certain principles of the invention and their practical application, to enable others skilled in the art to make and utilize various exemplary embodiments of the present disclosure, as well as various alternatives and modifications thereof. It is intended that the scope of the present disclosure be defined by the Claims appended hereto and their equivalents.

### REPRESENTATIVE FIGURE: FIG. 3

10: Battery pack
100: Battery sub-pack
100a: First battery sub-pack
100b: Second battery sub-pack
110: Battery stack
111: First battery stack
112: Second battery stack
120: Sensing block
122: Interference protruding portion
130: Sensing block insulation member
140: Connection member
150: Endplate part
150a: Insulation plate
150a-1: Insulation plate body region
150a-2: Insulation plate protruding region
150b: Surface pressure plate
150b-1: Recessed section
151: First endplate part
151a: First fastening region
152: Second endplate part
152a: Second fastening region
153: Endplate body region
154: Bent region
156: Interference region
200: Extension member
210: Extension member body region
210a: Groove region
210b: Recessed section
211: First thickness section
212: Second thickness section
220: Third fastening region
300: Tray part
310: Tray body region
320: Inner protruding region
400: Lateral coupling member
500: Bottom coupling member
600: Pack cover
700: Assembly module
S: Internal space of tray body region
t1: First thickness
t2: Second thickness

## Claims

1. A battery pack comprising:
a battery sub-pack including:
a battery stack having a structure in which a plurality of batteries including electrodes and separators is stacked in one direction; and
an endplate portion attached to the battery stack;
an extension member attached to the endplate portion; and
a tray portion accommodating the battery sub-pack and the extension member,
wherein the endplate portion, the extension member, and the tray portion are fixedly coupled to one another.

2. The battery pack of claim 1,
wherein through-holes are formed in the endplate portion and the extension member,
wherein the battery pack further includes coupling members penetrating the through-holes formed in the endplate portion and the extension member, and
wherein the endplate portion, the extension member, and the tray portion are fixedly coupled to one another by being fastened to the coupling members.

3. The battery pack of claim 2, wherein the tray portion includes:
a tray body region defining an internal space in which the battery sub-pack and the extension member are accommodated; and
an internal protruding region protruding toward the internal space from an internal surface of the tray body region that defines the internal space, and
wherein the coupling members include lateral coupling members fastened to the endplate portion, the extension member, and the internal protruding region.

4. The battery pack of claim 1, wherein the battery sub-pack includes:
a first battery sub-pack; and
a second battery sub-pack spaced from the first battery sub-pack in one direction,
wherein the extension member is provided between the endplate portion provided in the first battery sub-pack and the endplate portion provided in the second battery sub-pack, and
wherein the endplate portion provided in the first battery sub-pack, the endplate portion provided in the second battery sub-pack, the extension member, and the tray portion are fixedly coupled to one another.

5. The battery pack of claim 3, wherein the battery sub-pack includes:
a first battery sub-pack; and
a second battery sub-pack spaced from the first battery sub-pack in one direction,
wherein the extension member is provided between the endplate portion provided in the first battery sub-pack and the endplate portion provided in the second battery sub-pack, and
wherein the endplate portion provided in the first battery sub-pack, the endplate portion provided in the second battery sub-pack, the extension member, and the tray portion are fixedly coupled to one another by being fastened to the lateral coupling members.

6. The battery pack of claim 5, wherein the endplate portion includes:
a first endplate portion attached to a first side of the battery stack; and
a second endplate portion attached to a second side of the battery stack and facing the first endplate portion with the battery stack interposed therebetween,
wherein the extension member is attached to each of the first endplate portion provided in the first battery sub-pack and the second endplate portion provided in the second battery sub-pack, and
wherein the first endplate portion provided in the first battery sub-pack, the second endplate portion provided in the second battery sub-pack, the extension member, and the tray portion are fixedly coupled to one another by being fastened to the lateral coupling members.

7. The battery pack of claim 6,
wherein the first endplate portion includes a first fastening region including a through-hole, which is penetrated by the lateral coupling member, and extending toward the internal protruding region,
wherein the second endplate portion includes a second fastening region including a through-hole, which is penetrated by the lateral coupling member, and extending toward the internal protruding region,
wherein a lower surface of the first fastening region faces an upper surface of the internal protruding region, and
wherein a lower surface of the second fastening region faces an upper surface of the first fastening region.

8. The battery pack of claim 7, wherein the extension member includes:
an extension member body region attached to the endplate portion; and
a third fastening region extending from the extension member body region and including a through-hole penetrated by the lateral coupling member, and
wherein a lower surface of the third fastening region faces an upper surface of the second fastening region.

9. The battery pack of claim 1, wherein the endplate portion includes:
an endplate body region attached to the battery stack; and
a bent region extending from the endplate body region and bent toward the battery stack, and
wherein the bent region and the battery stack at least partially overlap each other in a direction in which the bent region extends from the endplate body region.

10. The battery pack of claim 2, wherein the endplate portion includes:
an endplate body region attached to the battery stack; and
an interference region bent toward the extension member from the endplate body region, and
wherein the interference region and the extension member at least partially overlap each other in a direction in which the interference region extends from the endplate body region.

11. The battery pack of claim 1, wherein the endplate portion includes:
an insulation plate attached to the battery stack and including a material having electrical insulation; and
a surface pressure plate attached to the insulation plate and facing the battery stack with the insulation plate interposed therebetween.

12. The battery pack of claim 11, wherein the insulation plate includes:
an insulation plate body region attached to the battery stack; and
an insulation plate protruding region protruding from the insulation plate body region in a direction away from the battery stack,
wherein a through-hole is formed in the surface pressure plate and includes a shape corresponding to the insulation plate protruding region, and
wherein the insulation plate protruding region is coupled to the surface pressure plate through the through-hole of the surface pressure plate.

13. The battery pack of claim 12,
wherein the extension member includes an extension member body region attached to the surface pressure plate, and
wherein the extension member body region includes:
a first thickness section having a first thickness defined in a direction toward the surface pressure plate; and
a second thickness section having a second thickness defined in the direction toward the surface pressure plate, and
wherein the second thickness is smaller than the first thickness.

14. The battery pack of claim 13,
wherein the second thickness section is formed at an upper or lower end portion of a region of the extension member body region that faces the insulation plate protruding region, and
wherein a width of the second thickness section formed at the upper or lower end portion of the extension member body region is greater than a width of the insulation plate protruding region.

15. The battery pack of claim 13,
wherein in the extension member body region, the second thickness section is formed at an upper or lower end portion of a region of the extension member body region that faces the insulation plate protruding region, and
wherein a width of the second thickness section formed at the upper or lower end portion of the extension member body region corresponds to a width of the insulation plate protruding region.
